# EUROPÄISCHE PATENTSCHRIFT

(11) **EP 1 958 499 B1**
(45) Veröffentlichungstag und Bekanntmachung des Hinweises auf die Patenterteilung: **15.04.2009**
(21) Anmeldenummer: 08002805.3
(22) Anmeldetag: 15.02.2008
(51) Int. Cl.: A01G 23/081, B65B 27/10

(54) **Schwachholzbündelvorrichtung**
Small dimensioned wood bundling device
Dispositif de fagot de petit bois

(30) Priorität: 15.02.2007 DE 102007008012
(43) Veröffentlichungstag der Anmeldung: 20.08.2008
(73) Patentinhaber: Vieths, Hans-Jürgen, 21702 Ahlerstedt-Ottendorf (DE)
(72) Erfinder: Vieths, Hans-Jürgen, 21702 Ahlerstedt-Ottendorf (DE); Vieths, Jürgen, 21698 Harsefeld (DE)
(74) Vertreter: Hansen, Jochen

(56) Entgegenhaltungen:
- WO-A-01/87049
- WO-A-92/14350
- WO-A-99/65773
- GB-A- 2 070 906
- US-A- 4 633 776
- JOHANSSON ET AL: "Transport and handling of forest energy bundles-advantages and problems" BIOMASS AND BIOENERGY, PERGAMON, OXFORD, GB, Bd. 30, Nr. 4, 1. April 2006 (2006-04-01), Seiten 334-341, XP005333707 ISSN: 0961-9534

## Beschreibung

Die Erfindung betrifft eine Schwachholzbündelvorrichtung mit einem Aufnahmebereich, in den das zu bündelnde Schwachholz eingelegt wird, einem Mittel zum Verdichten des eingelegten Schwachholzes und einer Wickelvorrichtung, wobei der Aufnahmebereich eine zylindrische, im bestimmungsgemäßen Betriebszustand liegende oder geneigte, innere Mantelfläche aufweist und die Mittel zum Verdichten des eingelegten Schwachholzes eine Vielzahl die Mantelfläche nach innen durch einen schlitzförmigen Ausschnitt in der Mantelfläche durchgreifende Mitnahmeelemente aufweisen, die zur Zylinderachse des Aufnahmebereichs in einer im Wesentlichen tangentialen, gleich gerichteten Bewegungsrichtung bewegt werden, um das eingelegte Schwachholz innerhalb der Mantelfläche in einer Richtung um die Zylinderachse zu rotieren.

Bündelmaschinen sind insbesondere aus Skandinavien bekannt. Beispielsweise ist von der Fa. John Deere Forstry Oy, Finnland ein Restholzbündler unter der Bezeichnung 1490D und Markenbezeichnung "Timberjack" bekannt. Dabei liegen derartigen Maschinen die Erkenntnis zugrunde, dass das beim Holzschlag bisher nicht verwendete sogenannte Restholz oder Schwachholz, also die Äste und Zweige der Baumkrone sowie andere Nebenprodukte ein erhebliches, bisher nicht genutztes, Wertstoffpotenzial bilden. Bisher wurde dieses Restholz oder Schwachholz beim Baumschlag auf der Fläche belassen, da dieses Holz bisher nicht in wirtschaftlicher Weise einer Weiterverwendung zugeführt werden konnte.

Durch sogenannte Restholzbündler, wie beispielsweise das voranstehend genannte John Deere-Gerät, kann das Restholz als nachwachsendes Rohmaterial, beispielsweise für die Energieerzeugung, verwertet werden, da die mit dieser Maschine gebildeten Bündel wirtschaftlich gehandhabt, transportiert und gelagert und dann bei Bedarf thermisch verwertet werden können.

Die bisher bekannten Restholzbündler sind jedoch sehr aufwendige, große und damit teure Geräte. Der John Deere 1490D ist auf einem schweren selbstfahrenden Fahrzeug mit Beschickungskran für den Restholzbündler aufgebaut. Vor dem Bündler ist ein Einzugstisch angeordnet, auf dem das zu bündelnde Restholz aufgelegt wird. Dabei weist der Bündler zwei feststehende Pressen und eine bewegliche Presse auf. Mit der beweglichen Presse wird das auf dem Einzugstisch aufliegende Restholz eingezogen und mittels der weiteren Pressen in seinem Volumen um ca. 80% reduziert. Es erfolgt dann eine Umwicklung des erzeugten Restholzbündels und ein Lösen der Presse. Das an der Ausgabeseite überstehende Restholzbündel wird dann von einer automatischen Kettensäge abgelängt. Somit entstehen Bündel von einer Länge zwischen 2,4 m bis 3,2 m und mit einem Bündeldurchmesser von ca. 70 cm bis 80 cm.

Ferner ist von der Pinox Oy, Finnland ein Restholzbündler unter der Bezeichnung "Pinox 330" bekannt, der ebenfalls auf einem Selbstfahrwerk mit Greifarm und einer Bündelmaschine mit Auflagetisch besteht. Das Reisig- und Astmaterial wird über Stahlförderbänder in die Bündelmaschine gespeist. Die Kompression des Materials erfolgt dann zwischen zwei Stahlförderbändern, die sich in Transportrichtung annähern. Auch diese Vorrichtung enthält ein Umwicklungsmechanismus zum Umwickeln des gebildeten Bündels mit einem Band. Anschließend erfolgt ein automatisches Ablängen mittels Kappsäge. Auch dieser Restholzbündler ist sehr aufwendig und damit teuer.

Aus der WO 99/65773 ist eine Bündelvorrichtung mit den Merkmalen des Oberbegriffs von Anspruch 1 bekannt. Der Aufnahmebereich hat eine zylindrische, im bestimmungsgemäßen Betriebszustand liegende oder geneigte, seitlich offene, innere Mantelfläche. Die Mittel zum Verdichten des eingelegten Schwachholzes weisen in der Mantelfläche geführte Förderketten , mit Mitnahmeelementen auf, wobei die Mitnahmeelemente zur Zylinderachse des Aufnahmebereichs tangential, also in einer Umfangslinie senkrecht zur Zylinderachse auf der Mantelfläche bewegt werden, um das eingelegte Schwachholz innerhalb der Mantelfläche in einer Richtung um die Zylinderachse zu rotieren. Die Mitnahmeelemente durchgreifen diese zylindrische Mantelfläche und bringen das darin eingelegte Schwachholz in Rotation um seine Längsachse. Eine ähnliche Vorrichtung ist aus der GB 2070906 A bekannt. Diese bekannten Vorrichtungen sind technisch sehr aufwendig.

Aufgabe der Erfindung ist es daher, eine Vorrichtung und ein Verfahren zum Bündeln von Schwachholz anzugeben, mit der bzw. bei dem Schwachholz mit einfacher Technik gebündelt werden kann.

Gelöst wird diese Aufgabe mit einer Bündelvorrichtung gemäß Anspruch 1.

Dadurch, dass der Aufnahmebereich eine oben offene Mantelfläche hat und die Bewegungsrichtung der Mitnahmeelemente neben einer Hauptkomponente in tangentialer Richtung eine kleinere Komponente in axialer Richtung hat, wird ein einfaches Befüllen der Vorrichtung, beispielsweise mit einem Greifer, gewährleistet. In den oben offenen, als zylindrische Mantelfäche ausgebildeten Aufnahmebereich kann das von oben eingelegte Schwachholz leicht in Rotation versetzt werden. Durch die Auflast des eingelegten Schwachholzes und die Rotationsbewegung wird das Schwachholz in erwünschter Weise verdichtet. Das nachfolgende Umwickeln des so erzeugten Schwachholzbündels erleichtert dann eine Handhabung des verdichteten Bündels. Damit bei der Rotationsbewegung eine kleinere Bewegungskomponente in axialer Richtung erzeugt und das in den Aufnahmebereich eingelegte Schwachholz kontinuierlich aufgedreht, dabei verdichtet und quasi zu einer "endlosen Zigarre" aufgewickelt.

Am abwärtigen Ende des Aufnahmebereichs kann dann eine Kappeinrichtung zum Abtrennen der fertig umwickelten Schwachholzbündel angeordnet sein. Entsprechend wird das aus der Vorrichtung überstehende Schwachholzbündel in gewünschter Bündellänge vom nachrückenden Schwachholzbündel abgetrennt.

Um die auf der gesamten zylindrischen Mantelfläche verteilten Mitnahmeelemente anzutreiben, sind die Mitnahmeelemente auf drehangetriebenen Wellen angeordnet, wobei die Wellen an der äußeren Mantelfläche des Aufnahmebereichs mit einem Winkel von 0,5° bis 15°, bevorzugt 2° bis 8°, besonders bevorzugt etwa 5° zur axialen Richtung angeordnet sind. Bei Versuchen hat sich herausgestellt, dass bei einem Winkel von 5° zur Axialrichtung eine optimale Abstimmung zwischen Rotationsbewegung und Vortrieb in axialer Richtung erreicht wird. Ferner ist es fertigungstechnisch möglich, die drehangetriebenen Wellen entlang der zylindrischen äußeren Mantelfläche mit einem Winkel von 5° über eine Breite des Aufnahmebereichs von 2 bis 2,5 m anzuordnen, ohne dass dabei zu große Fehlstellungen zwischen Welle und Mantelfläche entstehen.

Bedarfsweise wird die zu erzeugende Bewegungskomponente in axialer Richtung durch geneigte Aufstellung des Aufnahmebereichs mit einem Neigungswinkel seiner Zylinderachse zur Horizontalen von 0° bis 45° unterstützt.

Um die gleichmäßige Verteilung der Mitnahmeelemente auf der Umfangsfläche des Aufnahmebereichs zu erreichen, sind mehrere Wellen, bevorzugt 6 bis 15, besonders bevorzugt 10 bis 12, entlang der äußeren Mantelfläche im Wesentlichen gleichbeabstandet angeordnet.

Dadurch, dass das Mitnahmeelement mehrere von der Welle im Wesentlichen radial abstehende Mitnahmefinger aufweist, wird eine im Wesentlichen gleichmäßige Belastung der Wellen erreicht. Insbesondere wird vermieden, dass eine Welle nach einem Transportvorgang an einem Zweig plötzlich im Wesentlichen unbelastet weiterdrehen kann.

Fertigungstechnisch einfach ist der Mitnahmefinger aus einem flächigen Material gebildet, welches in einer Radialebene zur Welle angeordnet ist, wobei eine in Bewegungsrichtung hintere Flanke radial zur Welle orientiert ist und eine in Bewegungsrichtung vordere Flanke im Wesentlichen parallel vor der hinteren Flanke ausgerichtet ist und die Breite des Mitnahmefingers ½ bis ¼ der Höhe des Mitnahmefingers entspricht.

Wenn ein Hydraulikmotor zum Antrieb der Wellen vorgesehen ist, wobei bevorzugt die Wellen untereinander über Kettentriebe drehverbunden sind, kann die Vorrichtung von einem Hydrauliknebenantrieb, beispielsweise eines landwirtschaftlichen Schleppers oder Laders, angetrieben werden. Die Verbindung der Wellen untereinander über Kettentriebe ist technisch einfach und robust.

Um auch längere Schwachholzabschnitte in der Bündelvorrichtung verarbeiten zu können, ist an ihrem aufwärtigen Ende eine teleskopierbare Verlängerung des Aufnahmebereichs vorgesehen.

Dadurch, dass am abwärtigen Ende ein das erzeugte Bündel umschließender, in Bewegungsrichtung der Mitnahmeelemente, drehangetriebener Drehkranz mit im Wesentlichen radial nach innen zeigenden Mitnehmern angeordnet ist, wird die Rotationsbewegung, die von der im Wesentlichen tangential, also im Wesentlichen in einer Umfangslinie senkrecht zur Zylinderachse auf der Mantelfläche gerichteten Bewegungsrichtung erzeugt wird, unterstützt. Durch die kleinere Bewegungskomponente in axialer Richtung wird das erzeugte Schwachholzbündel durch diesen Drehkranz hindurchgefördert und entsprechend des Drehantriebs des Drehkranzes rotiert. Die radial nach innen zeigenden Mitnehmer können gegen Federkraft belastet in Richtung der axialen Bewegungsrichtung abklappbar ausgebildet sein, um den Vortrieb des Schwachholzbündels nicht zu behindern.

Wenn an ihrem aufwärtigen Ende eine teleskopierbare Verlängerung des Aufnahmebereichs vorgesehen ist, werden auch längere Äste und Zweige, die über den Aufnahmebereich überstehen, abgestützt. Die Rotationsbewegung wird damit durch heraushängende Äste nicht behindert. Ferner wird ein übermäßiger Ausschlag von aus dem Aufnahmebereich herausragenden Ästen vermieden.

Nachfolgend wird ein Ausführungsbeispiel der Erfindung anhand der beiliegenden Zeichnungen detailliert beschrieben.

Darin zeigt:
- Fig. 1: eine teils geschnittene Stirnansicht einer Bündelvorrichtung und
- Fig. 2: die Bündelvorrichtung gemäß Fig. 1 in einer Draufsicht.

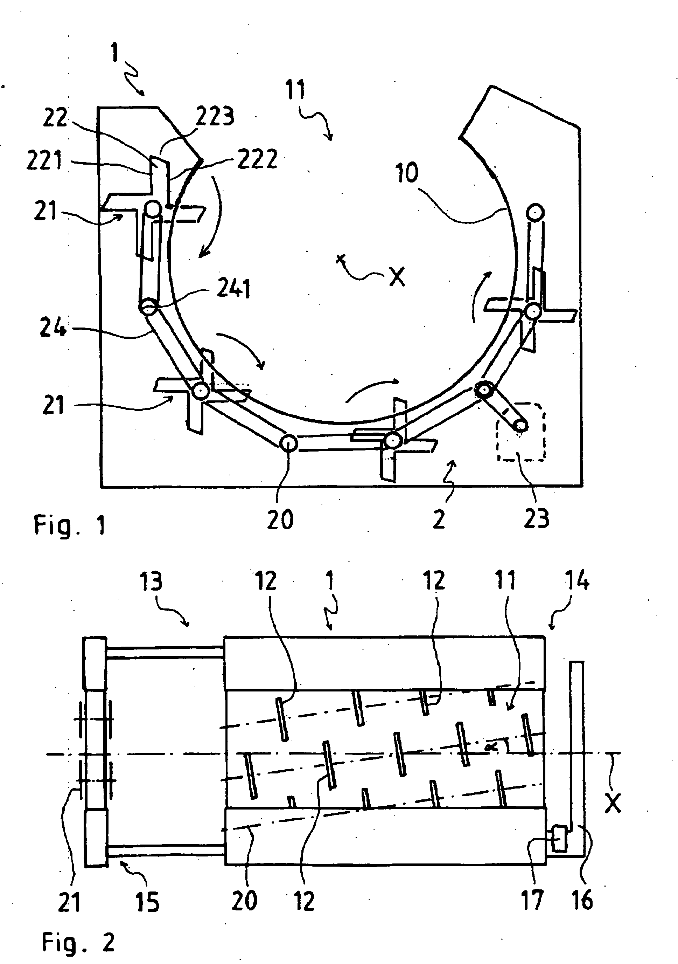

In Fig. 1 ist in einer Stirnansicht, teils geschnitten eine Bündelvorrichtung für Schwachholz dargestellt. Die Bündelvorrichtung weist einen Aufnahmebereich 1 auf, der eine liegend bzw. geneigt zylindrische, im bestimmungsgemäßen Betriebszustand oben offene, innere Mantelfläche 10 hat. Die Mantelfläche 10 bildet eine im Wesentlichen trogförmige Wanne, in die zu bündelndes Schwachholz eingelegt wird. Der Neigungswinkel der Zylinderachse der Mantelfläche zur Horizontalen kann 0° bis 45° betragen.

Die zylindrische Mantelfläche 10 weist in axialer Richtung eine Länge von 2 bis 5 m auf und hat einen inneren Durchmesser von ca. 1 bis 1,5 m. Die Mantelfläche 10 ist nicht über die vollständige Umfangsfläche geschlossen, sondern weist oben eine Öffnung 11 zum Zuführen von zu bündelnden Schwachholz auf. Die Mantelfläche 10 ist gebildet aus einem ausreichend stabilen Stahlblech. Auf der Außenseite der Mantelfläche 10 sind drehantreibbare Wellen 20 einer Antriebseinrichtung 2 angeordnet. Die Wellen 20 sind im Wesentlichen koaxial mit der Zylinderachse X der Mantelfläche 10 ausgerichtet, weisen jedoch einen kleinen Winkel α in einer Tangentialebene zur Zylinderachse X auf. Auf jeder Welle sind mehrere Mitnahmeelemente 21 angeordnet. Jedes Mitnahmeelement 21 weist im dargestellten Ausführungsbeispiel vier radial nach außen stehende Mitnahmefinger 22 auf. Die aus vier Mitnahmefingern 22 bestehenden Mitnahmeelemente 21 sind herstellungstechnisch einfach aus einem flächigen Material, insbesondere Stahlblech geschnitten. Jeder Mitnahmefinger 22 weist eine hintere Flanke 221 auf, die radial zur Welle 20 ausgebildet ist. Eine vordere Flanke 222 des Mitnahmefingers 22 ist in Drehrichtung der hinteren Flanke 221 vorgelagert parallel zu dieser angeordnet. Das freie Ende 223 des Mitnahmefingers 22 kann als rechtwinkliger gerader Abschluss zur vorderen und hinteren Flanke 221 und 222, schrägwinklig dazu mit spitzer Ecke an der vorderen Flanke 222 und stumpfer Ecke an der hinteren Flanke 222 oder in gerundeter Zungenform ausgebildet sein.

Die jeweiligen Mitnahmeelemente 21 sind auf der Welle 20 so angeordnet, dass bei Drehantrieb der Welle 20 die am Mitnahmeelement 21 angeordneten Mitnahmefinger 22 durch entsprechend in der Mantelfläche 10 des Aufnahmebereichs 1 vorgesehene schlitzförmige Ausschnitte 12 hindurch in den Innenraum der Mantelfläche 10 ragen. Bei der vorgenannten Ausbildung wird das Schwachholz durch die vordere Flanke 222 zunächst angehoben und dann in tangentialer Richtung in Drehbewegung um die Zylinderachse des Aufnahmebereichs gebracht.

Um das in den Aufnahmebereich 1 eingefüllte Schwachholz möglichst vollständig in Rotation zu versetzen, sind die Mitnahmeelemente 21 möglichst gleichmäßig auf der Mantelfläche 10 verteilt. Entsprechend sind mehrere Wellen 20 in Umfangsrichtung um Mantelfläche 10 im Wesentlichen gleich beabstandet zueinander angeordnet. Auf jeder Welle 20 sind entsprechend der axialen Länge des Aufnahmebereichs 1 mehrere Mitnahmeelemente 21 im Wesentlichen gleich beabstandet zueinander angeordnet.

Wichtig bei der Ausgestaltung des Mitnahmefingers 22 ist die Funktion des Transportes von Ästen und Zweigen in Bewegungsrichtung des Mitnahmefingers. Andererseits ist zu vermeiden, dass der Mitnahmefinger sich mit dem in Rotation zu versetzenden Schwachholz verklemmt. Bei der Ausgestaltung gemäß Ausführungsbeispiel hat sich gezeigt, dass eine intensive Rotationsbewegung erzeugt wird, ohne dass Zweige in der Vorrichtung festklemmen.

Bevorzugt an einem Ende des Aufnahmebereichs 1 bzw. der Mantelfläche 10, im dargestellten Ausführungsbeispiel am in Transportrichtung des zu bündelnden Schwachholzes gesehenen aufwärtigen Ende ist ein Hydraulikmotor 23 angeordnet. Vom Hydraulikmotor 23 führen Kettentriebe 24 zu auf den Wellen 20 angeordneten Kettenrädern 241. Somit ist gewährleistet, dass die Vorrichtung bei Inbetriebnahme synchron zueinander arbeitet und alle Wellen 20 eine in tangentialer Richtung zur Mantelfläche 10 gleichgerichtete Rotationsbewegung erzeugen.

Ferner ist am aufwärtigen Ende 13 eine teleskopierbare Verlängerung 15 des Aufnahmebereichs 1 angeordnet. Diese Verlängerung 15 nimmt die Form der Mantelfläche 10 auf und ist über eine entsprechende teleskopierbare Verbindung mit der übrigen Bündelvorrichtung verbunden. Bei ausgefahrener Verlängerung 15, wie in Fig. 2 dargestellt, werden am aufwärtigen Ende 13 aus dem Aufnahmebereich 1 herausragende Äste abgestützt, um ein unerwünschtes Herausfallen zu vermeiden. Bevorzugt weist die Verlängerung 15 zumindest in ihrem unteren Bereich drehangetriebene Mitnahmeelemente 21 auf, um hier auflastende Äste ebenfalls in Rotation zu versetzen.

Am abwärtigen Ende 14 des Aufnahmebereichs 1 ist eine Kappeinrichtung 16 zum Abtrennen von fertig umwickelten Schwachholzbündeln angeordnet. Die Kappeinrichtung 16 ist beispielsweise eine Kappsäge, Kettensäge oder Bügelsäge, die in geeigneter Weise fernbetätigt ausgelöst wird. Ferner ist zwischen Kappeinrichtung 16 und abwärtigen Ende 14 des Aufnahmebereichs 1 eine Wickelvorrichtung 17 zum Umwickeln des gebildeten Schwachholzbündels mit einem Band angeordnet.

Nachfolgend wird der Betrieb der Bündelvorrichtung unter Bezugnahme auf die Fig. 1 und 2 beschrieben.

Die erfindungsgemäße Bündelvorrichtung wird beispielsweise an einer Ladegabel eines Laders oder Schleppers montiert und über dessen Hydraulik angetrieben. Selbstverständlich kann die Vorrichtung auch auf der Ladefläche eines Kraftfahrzeugs oder dergleichen angeordnet werden.

Das zu bündelnde Schwachholz wird nun von Hand oder mechanisiert mittels Greifer in die Öffnung 11 in die trogförmige Mantelfläche 10 eingelegt. Die Bündelvorrichtung wird nun durch Aktivieren des Hydraulikmotors 23 gestartet, so dass das eingelegte Schwachholz in Rotation um die Zylinderachse X versetzt wird und dabei gleichzeitig durch die kleinere Bewegungskomponente in axialer Richtung zur Ausgabeseite, also dem abwärtigen Ende 14 befördert wird. Gleichzeitig wird stets weiter Schachholz in die Öffnung 11 des Aufnahmebereichs 1 eingefüllt.

Durch die resultierende Rotationsbewegung mit gleichzeitiger langsamer axialer Vorwärtsbewegung wird das Schwachholz kontinuierlich zu einer "endlosen Zigarre" aufgewickelt. Durch die Rotationsbewegung wird eine Verdichtung des Schwachholzes erreicht. Am abwärtigen Ende 14 des Aufnahmebereichs 1 wird sodann mittels der Wickelvorrichtung 17 ein Band stramm um das vorrückende Schwachholzbündel gewickelt. Bei Erreichen der gewünschten Länge des abzutrennenden Schwachholzbündels, der am abwärtigen Ende 14 aus der Vorrichtung übersteht, wird die Kappeinrichtung 16 aktiviert und der überstehende Teil des Schwachholzbündels abgetrennt.

Diese abgetrennten und umwickelten Schwachholzbündel können nun problemlos gehandhabt, insbesondere verladen, transportiert und gelagert sowie bei Bedarf in Bündelform verbrannt oder geschreddert werden.

Aufgrund der einfachen technischen Ausführung der erfindungsgemäßen Bündelvorrichtung in Verbindung mit der überraschenden Verdichtung des Schwachholzes bei der erfindungsgemäßen Rotationsbewegung wird eine kostengünstige Methode zur Erzeugung von Schwachholzbündeln angegeben. Die Bündelvorrichtung kann als modulares Zurüstteil an beliebigen Fahrzeugen mit hydraulischer Versorgung angebracht werden. Die Vorrichtung ist insbesondere interessant für Anwendungen, bei denen nur begrenzte Mengen von Schwachholz anfallen und somit teure Restholzbündler, wie sie aus dem Stand der Technik bekannt sind, nicht wirtschaftlich einsetzbar sind. Dies kann beispielsweise für das Freischneiden von Profilen an Verkehrswegen der Fall sein.

### Bezugszeichenliste

- 1: Aufnahmebereich
- 10: Mantelfläche
- 11: Öffnung
- 12: schlitzförmiger Ausschnitt
- 13: aufwärtiges Ende
- 14: abwärtiges Ende
- 15: Verlängerung
- 16: Kappeinrichtung
- 17: Wickelvorrichtung

- 2: Antriebseinrichtung
- 20: Welle
- 21: Mitnahmeelement
- 22: Mitnahmefinger
- 221: hintere Flanke
- 222: vordere Flanke
- 223: freies Ende
- 23: Hydraulikmotor
- 24: Kettentrieb
- 241: Kettenrad

- α: kleiner Winkel
- X: Zylinderachse

## Patentansprüche

1. Bündelvorrichtung für Schwachholz mit einem Aufnahmebereich (1), in den das zu bündelnde Schwachholz eingelegt wird, einem Mittel zum Verdichten des eingelegten Schwachholzes und einer Wickelvorrichtung (17), wobei der Aufnahmebereich (1) eine zylindrische, im bestimmungsgemäßen Betriebszustand liegende oder geneigte, innere Mantelfläche (10) aufweist und die Mittel zum Verdichten des eingelegten Schwachholzes eine Vielzahl die Mantelfläche (10) nach innen durch einen schlitzförmigen Ausschnitt (12) in der Mantelfläche (10) durchgreifende Mitnahmeelemente (21) aufweisen, die zur Zylinderachse (X) des Aufnahmebereichs (1) in einer im Wesentlichen tangentialen, gleich gerichteten Bewegungsrichtung bewegt werden, um das eingelegte Schwachholz innerhalb der Mantelfläche (10) in einer Richtung um die Zylinderachse (X) zu rotieren und der Aufnahmebereich (1) eine oben offene Mantelfläche (10) hat und die Bewegungsrichtung der Mitnahmeelemente (21) neben einer Hauptkomponente in tangentialer Richtung eine kleinere Komponente in axialer Richtung hat.

2. Bündelvorrichtung nach Anspruch 1, **dadurch gekennzeichnet, dass** die Mitnahmeelemente (21) auf drehangetriebenen Wellen (20) angeordnet sind, wobei die Wellen (20) außenseitig der Mantelfläche des Aufnahmebereichs (1) mit einem Winkel (α) von 0,5° bis 16°, bevorzugt 2° bis 8°, besonders bevorzugt etwa 5° zur axialen Richtung angeordnet sind.

3. Bündelvorrichtung nach Anspruch 2, **dadurch gekennzeichnet, dass** mehrere Wellen (20), bevorzugt 6 bis 15, besonders bevorzugt 10 bis 12, entlang der äußeren Mantelfläche im Wesentlichen gleichbeabstandet angeordnet sind.

4. Bündelvorrichtung nach Anspruch 2 oder 3, **dadurch gekennzeichnet, dass** das Mitnahmeelement (21) mehrere von der Welle (20) im Wesentlichen radial abstehende Mitnahmefinger (22) aufweist.

5. Bündelvorrichtung nach Anspruch 4, **dadurch gekennzeichnet, dass** der Mitnahmefinger (22) aus einem flächigen Material gebildet ist, welches in einer Radialebene zur Welle (20) angeordnet ist, wobei eine in Bewegungsrichtung hintere Flanke (221) radial zur Welle (20) orientiert ist und eine in Bewegungsrichtung vordere Flanke (222) im Wesentlichen parallel vor der hinteren Flanke (221) ausgerichtet ist und die Breite des Mitnahmefingers (22) ½ bis ¼ der Höhe des Mitnahmefingers (22) entspricht.

6. Bündelvorrichtung nach einem der vorangehenden Ansprüche 2 bis 6, **dadurch gekennzeichnet, dass** ein Hydraulikmotor (23) zum Antrieb der Wellen (20) vorgesehen ist, wobei bevorzugt die Wellen (20) untereinander über Kettentriebe (24) drehverbunden sind.

7. Bündelvorrichtung nach einem der vorangehenden Ansprüche, **dadurch gekennzeichnet, dass** an ihrem abwärtigen Ende (14) eine Kappeinrichtung (16) zum Abtrennen eines fertig gebündelten Schwachholzbündels angeordnet ist.

8. Bündelvorrichtung nach einem der vorangehenden Ansprüche, **dadurch gekennzeichnet, dass** am abwärtigen Ende (14) ein das erzeugte Bündel umschließender, in Bewegungsrichtung der Mitnahmeelemente (21), drehangetriebener Drehkranz mit im Wesentlichen radial nach innen zeigenden Mitnehmern angeordnet ist.

9. Bündelvorrichtung nach Anspruch 8, **dadurch gekennzeichnet, dass** die Mitnehmer in axialer Transportrichtung des zu erzeugenden Bündels klappbar ausgebildet sind.

10. Bündelvorrichtung nach einem der vorangehenden Ansprüche, **dadurch gekennzeichnet, dass** an ihrem aufwärtigen Ende (13) eine teleskopierbare Verlängerung des Aufnahmebereichs (1) vorgesehen ist.

## Claims

1. A bundling device for small dimensioned wood, having a receiving region (1) into which the small dimensioned wood to be bundled is inserted, a means for compacting the inserted small dimensioned wood and a wrapping device (17), wherein the receiving region (1) has a cylindrical, inner shell (10) which is horizontal or inclined in the conventional operating state and the means for compacting the inserted small dimensioned wood has a plurality of entraining members (21) which engage inwards through the shell (10), through a slit-shaped opening (12) in the shell (10), and which are moved in a substantially tangential, identically directed direction of motion with respect to the cylinder axis (X) of the receiving region (1) in order to rotate the inserted small dimensioned wood within the shell (10) in a direction about the cylinder axis (X), and the receiving region (1) has a shell (10) which is open at the top and the direction of motion of the entraining members (21) has, in addition to a main component in a tangential direction, a smaller component in an axial direction.

2. A bundling device according to claim 1, **characterised in that** the entraining members (21) are arranged on rotationally driven shafts (20), the shafts (20) being arranged on the exterior of the shell of the receiving region (1) at an angle (α) of 0.5° to 15°, preferably 2° to 8°, in particular preferably approximately 5°, to the axial direction.

3. A bundling device according to claim 2, **characterised in that** a plurality of shafts (20), preferably 6 to 15, in particular preferably 10 to 12, are substantially uniformly spaced along the outer shell.

4. A bundling device according to claim 2 or 3, **characterised in that** the entraining member (21) has a plurality of entraining fingers (22) which project substantially radially from the shaft (20).

5. A bundling device according to claim 4, **characterised in that** the entraining finger (22) is formed from a plane material arranged in a radial plane with respect to the shaft (20), a flank (221), rear in the direction of motion, being oriented radially to the shaft (20) and a flank (222), front in the direction of motion, being directed in a substantially parallel manner in front of the rear flank (221) and the width of the entraining finger (22) corresponding to ½ to ¼ of the height of the entraining finger (22).

6. A bundling device according to any one of the preceding claims 2 to 5, **characterised in that** an hydraulic motor (23) is provided to drive the shafts (20), the shafts (20) preferably being rotationally connected to one another via chain drives (24).

7. A bundling device according to any one of the preceding claims, **characterised in that** a cutting device (16) for cutting off a bundled bundle of small dimensioned wood is arranged at its downstream end (14).

8. A bundling device according to any one of the preceding claims, **characterised in that** a rotating assembly, which surrounds the produced bundle, is driven in rotation in the direction of motion of the entraining members (21) and has substantially radially inwards directed entrainers, is arranged at the downstream end (14).

9. A bundling device according to claim 8, **characterised in that** the entrainers are formed to be hinged in the axial transporting direction of the bundle to be produced.

10. A bundling device according to any one of the preceding claims, **characterised in that** a telescopic extension of the receiving region (1) is provided at its upstream end (13).

## Revendications

1. Dispositif de bottelage de petit bois, comportant une partie de réception (1), dans laquelle est introduit le petit bois à botteler, un moyen pour compacter le petit bois introduit et un dispositif de ficelage (17), la partie de réception (1) comportant une enveloppe (10) intérieure cylindrique, inclinée ou reposant horizontalement dans une position de service conforme à sa destination, et les moyens destinés à compacter le petit bois introduit comportant une pluralité d'éléments d'entraînement (21), qui s'engagent à travers l'enveloppe (10) vers l'intérieur par l'intermédiaire d'une découpe (12) en forme de fente réalisées dans l'enveloppe (10) et qui sont déplacés par rapport à l'axe du cylindre (X) de la partie de réception (1) dans une direction de déplacement sensiblement tangentielle orientée dans le même sens, afin de faire tourner le petit bois inséré dans une direction autour de l'axe du cylindre (X) à l'intérieur de l'enveloppe (10), et la partie de réception (1) ayant une enveloppe (10) ouverte sur le dessus et la direction de déplacement des éléments d'entraînement (21) ayant, outre une composante principale dans la direction tangentielle, une composante plus faible dans la direction axiale.

2. Dispositif de bottelage selon la revendication 1, **caractérisé en ce que** les éléments d'entraînement (21) sont disposés sur des arbres (20) entraînés en rotation, les arbres (20) étant montés à l'extérieur de l'enveloppe de la partie de réception (1) en formant avec la direction axiale un angle (α) de 0,5° à 15°, de préférence de 2° à 8°, de manière particulièrement préférée de 5° environ.

3. Dispositif de bottelage selon la revendication 2, **caractérisé en ce que** plusieurs arbres (20), de préférence 6 à 15, de manière particulièrement préférée 10 à 12, sont montés le long de l'enveloppe extérieure sensiblement à même distance les uns des autres.

4. Dispositif de bottelage selon la revendication 2 ou 3, **caractérisé en ce que** l'élément d'entraînement (21) comporte plusieurs doigts d'entraînement (22) s'écartant sensiblement radialement de l'arbre (20).

5. Dispositif de bottelage selon la revendication 4, **caractérisé en ce que** le doigt d'entraînement (22) est réalisé dans un matériau plat, qui est disposé dans un plan radial par rapport à l'arbre (20), un flanc arrière (221), par référence à la direction de déplacement, étant orienté radialement par rapport à l'arbre (20) et un flanc avant (222), par référence à la direction de déplacement, étant orienté sensiblement parallèlement devant le flanc arrière (221), et la largeur du doigt d'entraînement (22) correspondant à 1/2 à 1/4 de la hauteur du doigt d'entraînement (22).

6. Dispositif de bottelage selon l'une quelconque des revendications 2 à 5, **caractérisé en ce qu'**il est prévu un moteur hydraulique (23) destiné à actionner les arbres (20), les arbres (20) étant de préférence reliés en rotation entre eux par l'intermédiaire de transmissions par chaîne (24).

7. Dispositif de bottelage selon l'une quelconque des revendications précédentes, **caractérisé en ce que** sur son extrémité arrière (14) est monté un dispositif de coupe (16) destiné à séparer une botte de petit bois finie.

8. Dispositif de bottelage selon l'une quelconque des revendications précédentes, **caractérisé en ce que** sur son extrémité arrière (14) est montée une couronne rotative, qui entoure la botte réalisée et est entraînée en rotation dans la direction de déplacement des éléments d'entraînement (21) et qui comporte des entraîneurs dirigés sensiblement dans le sens radial vers l'intérieur.

9. Dispositif de bottelage selon la revendication 8, **caractérisé en ce que** les entraîneurs peuvent être rabattus dans la direction de transport axiale de la botte à réaliser.

10. Dispositif de bottelage selon l'une quelconque des revendications précédentes, **caractérisé en ce qu'**un prolongement télescopique de la partie de réception (1) est prévu sur son extrémité avant (13).
